# EUROPEAN PATENT APPLICATION

(11) **EP 1 722 214 A1**
(43) Date of publication of application: **15.11.2006**
(21) Application number: 06008441.5
(22) Date of filing: 24.04.2006
(51) Int. Cl.: G01N 21/35, G01N 21/61

(54) **Gas sensor arrangement and measuring method for improving long-term stability**

(30) Priority: 13.05.2005 DE 102005022288
(71) Applicant: Tyco Electronics Raychem GmbH, 85521 Ottobrunn (DE)
(72) Inventor: Frodl, Robert, 81825 München (DE); Loewe, Hans-Dirk, 81249 München (DE)
(74) Representative: Grünecker, Kinkeldey, Stockmair & Schwanhäusser Anwaltssozietät

(57) **Abstract**

The present invention relates to a method for measuring the presence and/or the concentration of an analyte by a gas sensor arrangement (100) and relates to a corresponding gas sensor arrangement. The gas sensor arrangement comprises at least a first radiation source (102) emitting radiation (116) and at least a second radiation source (103) emitting radiation (117). A gas measuring chamber (104) may be filled with a gaseous analyte (110) containing at least one analyte to be measured. At least one detector (108) detects the radiation and generates a mostly electric output signal, which depends on the presence and/or the concentration of the analyte. The first radiation source is operated as a reference radiation source, and the second radiation source is operated as a measuring radiation source. After a predetermined service life of the gas sensor arrangement, the operation of the first and second radiation sources is interchanged.

## Description

The present invention relates to a method for measuring the presence and/or the concentration of an analyte using a gas sensor arrangement, and also relates to a corresponding gas sensor arrangement. The gas sensor arrangement comprises at least a first radiation source emitting radiation and at least a second radiation source emitting radiation. A gas measuring chamber may be filled with a gaseous analyte, which contains at least one analyte to be measured, and at least one detector device that detects the radiation and produces a mostly electric output signal, which depends on the presence and/or on the concentration of the analyte.

Gas sensor arrangements of this type are known for detecting the most varied types of analyte, for example, methane or carbon dioxide. Gas sensors, as described, for example, in EP 0616207 A2, WO 00/55603 A1 or DE 19925196 C2, are based on the characteristic that many polyatomic gases absorb radiation, in particular within the infrared wavelength range. This absorption occurs in a wavelength which is characteristic of the relevant gas, for example, at a wavelength of 4.24 µm in the case of carbon dioxide. It is thus possible, using such infrared gas sensors, to determine the presence of a gas component and/or the concentration of this gas component. Known gas sensors comprise a radiation source, an absorption path, i.e. a measuring chamber, and a radiation detector. The radiation intensity measured by the radiation detector is a measurement of the concentration of the absorbent gas according to the Beer-Lambert Law.

A broadband radiation source, such as an incandescent lamp, is generally used, and the wavelength which is of interest is selected via an interference filter or grid. This type of radiation generation is also called a non-dispersive method and, in the case of infrared-carbon dioxide analysis, is termed the non-dispersive infrared (NDIR) method.

The detection of carbon dioxide is becoming increasingly important for applications in construction and automotive engineering. This is due, on the one hand, to the monitoring of the carbon dioxide content of the inside air in order to increase energy efficiency, in the case of heating and air-conditioning, in order to induce a supply of fresh air via a corresponding ventilation control system only when required, i.e. when the concentration of carbon dioxide increases. On the other hand, modern air-conditioning systems, in particular in the automotive field, are based on carbon dioxide as a coolant. Therefore, carbon dioxide gas sensors may perform a monitoring function in connection with the carbon dioxide escaping in the event of possible defects. Finally, it has been found that the carbon dioxide concentration represents a basic indicator for the quality of inside air and is therefore highly significant as a control variable for air-conditioning systems.

Particularly in the automotive field, sensors of this type must, however, satisfy the highest requirements in terms of robustness, reliability and compactability. Long-term stability of many years, i.e. a service life of more than 10 years, is required. The specification values must be observed during the entire service life, but the problem arises here that the components of the beam path, in particular the radiation source and the switching electronics, age.

In order to counteract this problem, it is known to provide at least two beam paths with an infrared radiation source and two detectors. One of the detectors measures the required gas and the other monitors the brightness of the radiation source using a different wavelength. With the aid of the second detector, the change detected in the brightness of the radiation source may be factored into a correction calculation. However, this known solution suffers from the disadvantage that it is relatively complex.

Another known solution, which is shown, for example, in DE 199 25 196 C2, uses at least two beam paths with two infrared radiation sources and only one detector. The first radiation source is used at the necessary measuring rate for the measurement, while the second radiation source is used only relatively rarely for carrying out a comparative measurement and a referencing of the actual measuring radiation source. If the reference radiation source is used to produce a comparative measurement only every x intervals compared to the measuring intervals, it may be assumed that the ageing, which is lower by the factor x, is mapped onto the more severely ageing measuring radiation source. Moreover, the known solution provides a so-called burn-in phase with an extended service life for reducing an increased initial ageing.

This known solution has the disadvantage, however, that by the operation of the respective modules, the measuring radiation source and the associated switching electronics age more rapidly by the factor x than the reference radiation source and the switching electronics thereof. However, this means that the final service life of the entire gas sensor arrangement is restricted by the service life of the measuring radiation source and the associated live switching electronics.

Thus, the object on which the present invention is based is to provide an improved gas sensor arrangement and an associated measuring method, which arrangement allows an extended service life with a simultaneous improvement in the long-term stability and an increase in reliability.

This object is achieved by a measuring method and a gas sensor arrangement having the features of the independent claims. Advantageous developments of the present invention are stated in the dependent claims.

The present invention is based on the idea that in an arrangement comprising a measuring radiation source and a reference radiation source, the changes due to ageing decrease with an increasing service life. If the reference radiation source is operated by the factor x less often than the measuring radiation source, then conversely the measuring radiation source arrives, by the factor x faster than the reference radiation source, in a more stable range than the actual reference radiation source. It is therefore possible to observe the specification values for longer if, according to the invention, the functions of the first and second radiation sources 102, 103 are interchanged within the expected service life after an optimized time. Since the modules are constructed symmetrically and are usually controlled by so-called embedded software, this may be carried out in a particularly simple manner. In addition to the improvement in long-term stability, this solution according to the invention also has the advantage of an obvious increase in the service life, because the operation of the radiation source and live switching electronics during the entire service life is divided into two branches.

After the predetermined optimum service life, to interchange the first and second radiation sources, a ratio is first of all advantageously determined between the sensitivity of the first and second radiation sources, and then the measurement is carried out using the second radiation source as a measuring radiation source. In this way it is particularly easy to achieve the transition from one radiation source to the other.

If necessary, the interchanging step may also be repeated once or several times to achieve as uniform an ageing as possible of the complete system.

According to an advantageous development, a temperature sensor may also be provided in the gas measuring chamber for monitoring the temperature. In this way, the accuracy of the measurement may be increased even further using a calculated correction of the effects of temperature.

If the wall of the gas measuring chamber is configured to reflect the radiation emitted by the radiation source, as may be achieved, for example, by a metallization process, for example, by a gold layer deposited by sputtering, vaporizing or by electroplating, the efficiency of the gas sensor arrangement according to the invention may be even further increased.

The advantageous principles of the present invention are particularly effective when the principle according to the invention is used for triggering a non-dispersive infrared radiation source for the measurement of carbon dioxide. However, the principles of the invention may also be applied to other radiation sources and to the analysis of other gases, insofar as only the measuring radiation source and the reference radiation source are provided with identical characteristics and are in a symmetrical arrangement, so that an interchange of the first and second radiation sources is possible according to the principles of the invention.

The present invention will be described in more detail below with reference to the advantageous embodiments illustrated in the accompanying drawings. Similar or corresponding details of the subject-matter according to the invention are denoted by the same reference numerals. In the drawings:
Fig. 1 is a block circuit diagram of a gas sensor arrangement according to the invention;
Fig. 2 is a time-dependency diagram of radiation pulses emitted during a first referencing phase from a first radiation source and from a second radiation source, according to a possible embodiment of the invention;
Fig. 3 is a time-dependency diagram of the radiation pulses emitted during a second referencing phase from the first radiation source and from the second radiation source; and
Fig. 4 is a schematic illustration of a control system of Fig. 1 according to a possible embodiment of the invention.

The construction and operation of the gas sensor arrangement according to the invention will be described in more detail below with reference to the figures.

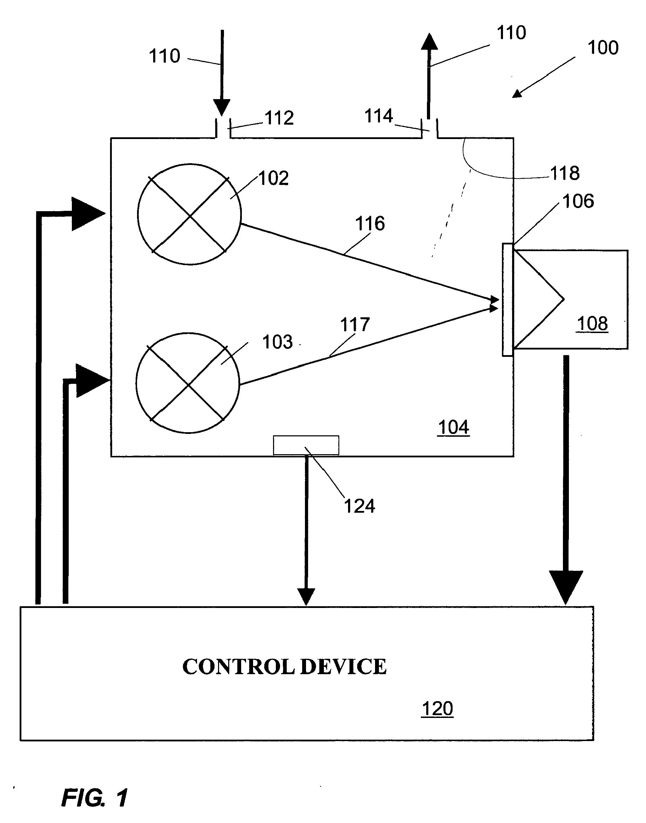

As shown in Fig. 1, the gas sensor arrangement 100 according to the invention comprises a first radiation source 102 and a second radiation source 103. In this case, the first and second radiation sources 102, 103 are broadband infrared radiation sources, and the gas sensor arrangement 100 is a so-called NDIR sensor. The fundamental components, apart from the first and second radiation sources 102, 103 which, in the simplest case, are each formed by an incandescent lamp, are a gas measuring chamber 104, an optical filter 106 and an infrared detector 108.

A gaseous analyte 110 is pumped or diffused into the gas measuring chamber 104 through inlet 112 and outlet 114 for the measuring procedure. The concentration of the gaseous analyte 110 may be determined electro-optically via the absorption of a specific wavelength in the infrared range. For example, if carbon dioxide is detected, the characteristic wavelength is 4.24 µm. During this process, emitted radiation 116, 117 is directed through the gas measuring chamber 104 to the detector 108. The optical filter 106 of the detector 108 only allows through the wavelength range in which the gas molecules to be detected absorb. Other gas molecules generally do not absorb any light in this wavelength range and thus do not influence the amount of the radiation 116, 117 which arrives at the detector 108. The emitted radiation 116, 117 is usually pulsed or modulated by the first and second radiation sources 102, 103 in order to be able to filter thermal background signals out of the desired signal. A control device 120 controls the first and second radiation sources 102, 103 on the one hand and receives and further processes output signals from the detector 108 on the other hand.

According to the invention, the first and second radiation sources 102, 103 are positioned such that the beam paths of the emitted radiation 116, 117 have the same effective optical path length as the detector 108 or they are positioned symmetrically to an axis of symmetry of the gas measuring chamber 104. During a first referencing phase, the second radiation source 103 is switched on as a reference radiation source in time intervals to check the ageing state of the first radiation source 102 functioning as a measuring radiation source. A control device 120 determines the ageing of the measuring radiation source from the deviations with respect to the output signals of the detector 108, when the second radiation source 103 is switched on compared to the switched-on first radiation source 102 and, if necessary, corrects the signals accordingly.

It is provided according to the invention that the control device 120 is configured such that after a predetermined service life of the gas sensor arrangement 100, the functions of the first radiation source 102 and of the second radiation source 103 are changed over in a second referencing phase, i.e. at the end of this predetermined service life. The first radiation source 102 then operates as the reference radiation source and the second radiation source 103 is used as the measuring radiation source during further operation. In this way, it is possible for the measured values to become as stable as possible and for a clearly prolonged total life of the gas sensor arrangement 100 to be achieved.

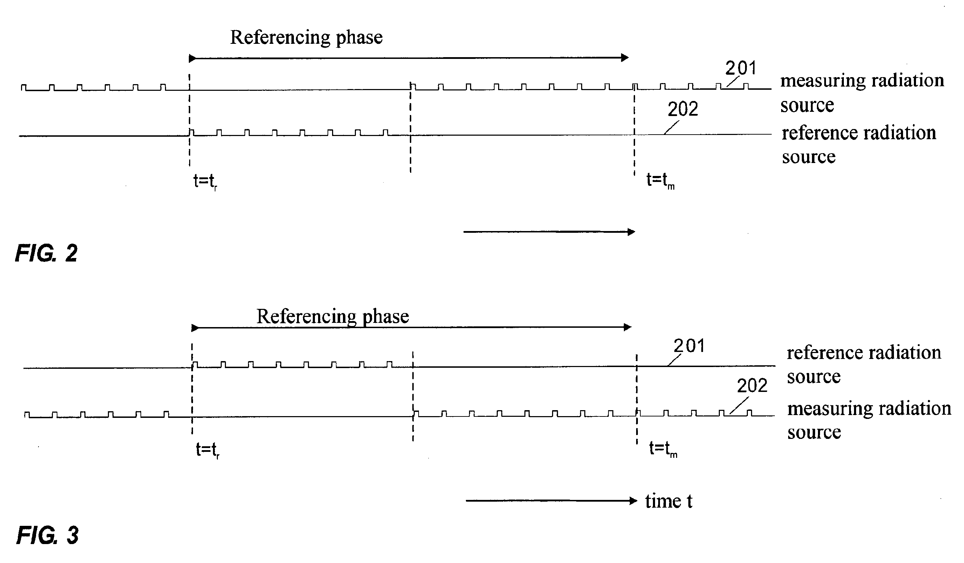

The temporal sequence according to the invention of the triggering of the first and second radiation sources 102, 103 will now be described in more detail with reference to Figs. 2 and 3.

Fig. 2 shows during the first referencing phase the pulsed operation of the first radiation source 102 as curve 201 and of the second radiation source 103 as curve 202. In Fig. 2 according to the invention, the first radiation source 102 is operated as the measuring radiation source, i.e. it is triggered in a substantially continuous and pulsed manner for emitting radiation. In contrast thereto, the second radiation source 103 is operated only intermittently during a part of the referencing phase as the reference radiation source. The respective referencing phase commences with the triggering of the second radiation source 103 as the reference radiation source, so that this source emits radiation pulses, as shown in the curve 202. After eight pulses, for example, the first radiation source 102 is then triggered again in order to initially ascertain comparative values for the correction procedure and to then continue the measuring procedure (curve 201). These referencing phases are re-enacted repeatedly in longer time intervals.

However, it is of course also possible to provide any other pulse sequences for the first and second radiation sources 102, 103.

As a result of the operation of the first and second radiation sources 102, 103 according to the pulse sequence in Fig. 2, the first radiation source 102 operating as the measuring radiation source and the associated switching electronics ages by factor x, with which the reference radiation source is switched on less often compared to the measuring radiation source, faster than the second radiation source 103. This means, however, that the first radiation source 102 reaches a relatively more stable range than the second radiation source 103 operating as the reference radiation source.

According to the invention, the specification values may thus be observed for a longer period of time if the function of the first and second radiation sources 102, 103 is interchanged after a predetermined optimal time within the expected service life. Fig. 3 illustrates the corresponding time sequence diagram for this second referencing phase. In Fig. 3, the first radiation source 102 is now used as the reference radiation source and the second radiation source 103 operates as the measuring radiation source (curve 202).

Since the first and second radiation sources 102, 103 are configured symmetrically and the control device 120 comprises so-called embedded software according to a possible embodiment, it is easy to achieve a triggering procedure which is altered in this way.

During the operation interchange, a referencing phase is preferably carried out as shown in Fig. 2. The ratio of sensitivities is determined and the reference radiation source is then re-used for measuring.

Consequently, the service life may advantageously also be clearly extended, because the operation of the first and second reference radiation sources 102, 103 and of the live switching electronics is divided into two branches during the entire service life. The present invention thus optimizes the ageing behavior and the life of the entire arrangement.

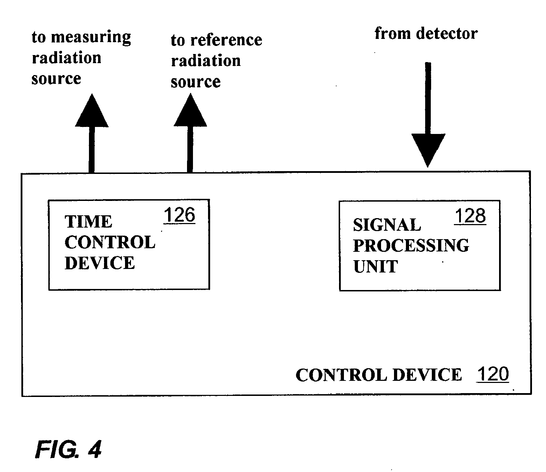

Fig. 4 schematically shows the control device 120. The control device 120 comprises a time control device 126 which controls the pulsed operation of the first and second radiation sources 102, 103. A signal processing unit 128 receives the signals output by the detector 108 and processes them accordingly. In order to be able to eliminate background signals, for example, more efficiently, a frequency filter may be provided which is aligned with the pulse frequency during the measuring operation. The signal processing unit 128 may also supply signals to warning and indication devices to represent the measuring results. It is also possible to provide a temperature monitoring unit which is connected to an optional temperature sensor 124, as shown in Fig. 1. Additionally, a wall 118 of the gas measuring chamber 104 may be provided with a metal coating, preferably with a gold layer deposited by sputtering, vaporizing or by electroplating.

According to the invention, the control device 120 determines which of the radiation sources 102, 103 is to be operated as the reference radiation source and which is to be operated as the measuring radiation source, and takes over the coordination of the exchange procedure.

Although the above-mentioned embodiments always proceed from two radiation sources and one detector unit, the principles of the present invention may, however, of course also be applied, after being adapted accordingly, to any other number of radiation sources and detectors.

## Claims

1. Method for measuring the presence and/or the concentration of an analyte using a gas sensor arrangement (100) which comprises
at least one first radiation source (102) emitting radiation (116) and at least one second radiation source (103) emitting radiation (117),
a gas measuring chamber (104) which may be filled with a gaseous analyte (110) containing at least one analyte to be measured, and
at least one detector (108) which detects the radiation and generates an output signal which depends on the presence and/or the concentration of the analyte,
wherein the method comprises the following steps:
operating the first radiation source as a measuring radiation source for emitting radiation to carry out at least one measurement,
operating short-term, within predetermined time intervals, the second radiation source as a reference radiation source for emitting radiation to determine reference measured values,
wherein after a predetermined service life of the gas sensor arrangement to interchange the first and second radiation sources, the first radiation source is operated as a reference radiation source and the second radiation source is operated as a measuring radiation source.

2. Method according to claim 1, wherein the first radiation source and the second radiation source emit infrared radiation.

3. Method according to either claim 1 or claim 2,
wherein a gaseous analyte, preferably carbon dioxide, is detected and/or the concentration thereof is determined.

4. Method according to at least one of the preceding claims, wherein after the predetermined service life for interchanging the first and second radiation sources, a ratio of the sensitivities for the first and second radiation sources is initially determined, and measuring is then carried out using the second radiation source.

5. Method according to at least one of the preceding claims, wherein at the end of at least a further predetermined service life, the interchanging step is carried out at least once more.

6. Gas sensor arrangement comprising at least a first radiation source (102) emitting radiation (116), and at least a second radiation source (103) emitting radiation (117), a gas measuring chamber (104) which may be filled with a gaseous analyte (110) containing at least one analyte to be measured, at least one detector (108) which detects the radiation and generates an output signal depending on the presence and/or the concentration of the analyte, and comprising a control device (120) for triggering the first and second radiation sources and for evaluating the output signal from the detector,
wherein the control device may be operated in order to trigger the at least one first radiation source as a measuring radiation source, so that the first radiation source emits radiation for carrying out the measurement, and in order to trigger the second radiation source as a reference radiation source so that the second radiation source emits radiation for determining reference measurement values, and
wherein the control device may be operated in order to run the first radiation source as a reference radiation source and the second radiation source as a measuring radiation source after a predetermined service life of the gas sensor arrangement to interchange the first and second radiation sources.

7. Gas sensor arrangement according to claim 6, wherein the radiation to be detected is infrared radiation and the at least one first radiation source and the second radiation source are formed by infrared radiation sources, preferably by a light-emitting diode or by lamps emitting a broadband light spectrum.

8. Gas sensor arrangement according to either claim 6 or claim 7, wherein at least one temperature sensor (124) is provided for monitoring the temperature in the gas measuring chamber.

9. Gas sensor arrangement according to any one of claims 6 to 8, wherein the wall (118) of the gas measuring chamber is configured so that it reflects the radiation emitted by the radiation source.

10. Gas sensor arrangement according to claim 9,
wherein a wall (118) of the gas measuring chamber is provided with a metal coating, preferably with a gold layer deposited by sputtering, vaporizing or by electroplating.

11. Gas sensor arrangement according to any one of claims 6 to 10, wherein it is set up to detect a gaseous analyte, preferably carbon dioxide, and/or to determine the concentration thereof.
